# EUROPÄISCHE PATENTSCHRIFT

(11) **EP 0 412 076 B1**
(45) Veröffentlichungstag und Bekanntmachung des Hinweises auf die Patenterteilung: **26.05.1993**
(21) Anmeldenummer: 90890219.0
(22) Anmeldetag: 24.07.1990
(51) Int. Cl.: F02B 37/12, F02M 25/06, F02M 25/02, F02B 29/04

(54) **Brennkraftmaschine mit Abgasturbolader**
Internal combustion engine with supercharger
Moteur à combustion interne et turbocompresseur

(30) Priorität: 03.08.1989 AT 1875/89
(43) Veröffentlichungstag der Anmeldung: 06.02.1991
(73) Patentinhaber: AVL Gesellschaft für Verbrennungskraftmaschinen und Messtechnik mbH.Prof.Dr.Dr.h.c. Hans List, 8020 Graz (AT)
(72) Erfinder: Kriegler, Wolfgang, Dipl.-Ing., A-8020 Graz (AT); Aufinger, Hans, Dipl.-Ing., A-8010 Graz (AT); Schweinzer, Franz, Dipl.-Ing., A-8051 Graz (AT)
(74) Vertreter: Krause, Walter, Dr. Dipl.-Ing.

(56) Entgegenhaltungen:
- US-A- 2 977 940
- US-A- 4 122 679
- US-A- 4 270 508
- PATENT ABSTRACTS OF JAPAN vol. 8, no. 54 (M-282)(1491) 10 März 1984,& JP-A-58 206823 (AISHIN SEIKI) 02 Dezember 1983,
- PATENT ABSTRACTS OF JAPAN vol. 10, no. 218 (M-503)(2274) 30 Juli 1986,& JP-A-61 55358 (TOYOTA) 19 März 1986,

## Beschreibung

Die Erfindung bezieht sich auf eine Brennkraftmaschine mit Abgasturbolader, ggf. einem Ladeluftkühler sowie einem Abgasrückführventil, welches in einer vor der Abgasturbine aus dem Abgasrohr abzweigenden, in Strömungsrichtung nach der Abgasturbine in das Ladeluftrohr einmündenden Verbindungsleitung angeordnet ist.

Aus der JP-A 58-206823 ist eine Brennkraftmaschine mit einem Abgasrückführventil der eingangs genannten Art bekannt. Das Abgasrückführventil dient dabei zur Reduzierung der Ladungswechselverluste im niedrigen Drehzahlbereich. Die Steuerung des Abgasventiles ist starr mit der Gaspedalstellung verknüpft, sodaß mit zunehmendem Pedalweg das Abgasventil geschlossen wird. Eine wirksame Reduzierung der Stickoxide läßt sich mit dieser Anordnung nicht erreichen.

Zur Erfüllung der zu erwartenden strengen gesetzlichen Bestimmungen bezüglich der Stickoxid-Emissionen werden die Entwickler und Hersteller von Nutzfahrzeug-Dieselmotoren künftig gezwungen sein, die Stickoxid-Emissionen der Motoren drastisch zu reduzieren.

Bei den für Nutzfahrzeug-Dieselmotoren gesetzlich vorgeschriebenen Testverfahren (Europa 13-Stufen-Test; USA Heavy Duty Transient Cycle) werden ca. 70 bis 80% der Stickoxide im Hochlastbereich erzeugt. Bislang galt es für undurchführbar, im Hochlastbereich die bisher im unteren Lastbereich zur Reduktion des Stickoxids mit Erfolg praktizierte Abgasrückführung einzusetzen, da einerseits mit einem starken Anstieg der Rauch- und Partikelemission zu rechnen war, und anderseits die Dauerhaltbarkeit durch erhöhten Verschleiß beeinträchtigt würde. Der erhöhte Verschleiß tritt dadurch auf, da es bei ungereinigten Dieselabgas zu einem Eintrag von Feststoffpartikeln über den Ölfilm der Zylinderwand in das Motoröl kommt. Ferner war zu erwarten, daß durch die Abgasrückführung in den Hochlastpunkten die Ladelufttemperatur stark erhöht würde, was einen NOₓ-fördernden Einfluß auf die Verbrennung hätte, wodurch die NOₓ-Senkung durch die Abgasrückführung stark beeinträchtigt würde.

Ein Großteil heutiger Nutzfahrzeug-Motoren ist, wie eingangs angegeben, zur Verbrauchs- und NOₓ-Senkung mit einer Ladeluftkühlung versehen. Eine Abgasrückführung im Hochlastbereich wäre nur dann sinnvoll, wenn das rückgeführte Abgas vor dem Ladeluftkühler dem Ansaugluftstrom hinzugefügt wird. Diese Vorgangsweise verbietet sich allerdings wegen des Umstandes, daß für eine ausreichende Kühlung ein unakzeptabler Bau- und Energieaufwand erforderlich wäre. Außerdem würden die im rückgeführten Abgas konventioneller Brennkraftmaschinen enthaltenen Partikel durch Ablagerung zur Verschmutzung und damit zur Unwirksamkeit bzw. Verstopfung des Ladeluftkühlers führen. Also bliebe nur die Möglichkeit, das rückgeführte Abgas zu reinigen oder ungereinigt unter Inkaufnahme einer Verunreinigung und Aufheizung der Ladung nach dem Ladeluftkühler dem Ansaugluftstrom beizufügen.

Aus der US-PS 2,977.940 ist es bekannt, einen mit Wasserdampf angefeuchteten Abgasteilstrom durch einen Kühler unterhalb des Taupunktes abzukühlen und in die Ansaugleitung rückzuführen. Dadurch kann die Leistung und der Wirkungsgrad erhöht und die Verbrennungsqualität verbessert werden. Der notwendige Kühler für das rückgeführte Abgas ist allerdings extrem gefährdet gegen Verschmutzung durch Partikelablagerung aus dem Abgas, was seine Funktion sehr bald stark einschränken würde. Eine befriedigende Reduzierung der Stickoxide über eine längere Betriebszeit hinweg ist mit der in der Schrift gezeigten Anordnung somit nicht zu erzielen.

Es ist auch bekannt, zur Kühlung des Zylinderkopfes und des Kolbens von Hochleistungsmotoren, insbesondere Rennmotoren, Wasser in den Verbrennungsraum einzuspritzen. Als Nebeneffekt wurde dabei eine Reduzierung der Stickoxid-Emission festgestellt.

Ferner ist aus der US-PS 4,270.508 ein selbstregelndes Wassereinspritzsystem bekannt, durch welches in Abhängigkeit vom Saugrohrunterdruck Wasser in die Abgasrückführleitung eingespritzt und zerstäubt wird, wodurch die Leistung und der Wirkungsgrad erhöht und die Emissionen verringert werden können.

Allerdings lassen sich mit dem selbstregelnden Einspritzsystem nicht alle Motorbetriebszustände befriedigend abdecken. In instationären Betriebszuständen, in der Startphase und beim Abstellen des Motors entspricht die angesaugte Wassermenge nicht den Erfordernissen. In der Startphase schlägt sich das Wasser an den noch kalten Rohren nieder und verdampfte erst bei höher werdender Temperatur, was ein kurzzeitiges Überfeuchten der angesaugten Luft zur Folge hat. Beim Abstellen des Motors verbleibt das zuletzt angesaugte Wasser in der Rückführ- und Ansaugleitung und verursacht eine beschleunigte Korrosion der Rohre. Ein aktives Steuern der Wassermengen ist mit dem selbstregelnden Wassereinspritzsystem nicht möglich.

Der Erfindung liegt die Aufgabe zugrunde, bei einer Brennkraftmaschine der eingangs genannten Art die oben angegebenen Nachteile zu vermeiden und bei Anwendung einer Abgasrückführung im Hochlastbereich zur Reduzierung der Stickoxid-Emissionen des Motors die Ladelufttemperaturerhöhung möglichst gering zu halten.

Die Erfindung besteht in einer Einrichtung zur Wassereinspritzung mit einem elektronisch gesteuerten Wasser-Einspritzventil, welches über eine Vorpumpe mit einem Wassertank verbunden ist, wobei das Wasser-Einspritzventil in den die Verbindungsleitung durchströmenden Abgasteilstrom im betriebswarmen Zustand und Hochlastbereich der Brennkraftmaschine Wasser einspritzt.

Neuere Verbrennungsentwicklungen bei Nutzfahrzeug-Dieselmotoren haben gezeigt, daß diese Motoren im hohen Lastbereich so partikelarm gemacht werden können, daß eine 10 bis 20%ige Abgasrückführrate auch ohne vorherige Reinigung und Zugabe nach dem Ladeluftkühler möglich erscheint. Durch die Partikelarmut des rückgeführten Abgases ist auch das Problem des erhöhten Motorverschleißes als Folge der Schmierölverschmutzung durch die Abgasrückführung vermindert.

In weiterer Ausgestaltung der Erfindung ist vorgesehen, daß die Wasser-Einspritzmengen im Motorkennfeld in der Motorelektronik abgelegt sind.

Es ist besonders vorteilhaft, wenn, nach einem weiteren Merkmal der Erfindung, das Wasser-Einspritzventil in der Verbindungsleitung - in Strömungsrichtung des Abgasteilstromes - hinter dem Abgasrückführventil angeordnet ist.

Für eine gute Vermischung und Verdampfung des in den Abgasteilstrom eingespritzten Wassers kann erfindungsgemäß das Wasser-Einspritzventil vom Abgasteilstrom umfaßt sein.

Zur Schonung des Wasser-Einspritzventiles kann im Rahmen der Erfindung vorgesehen sein, daß dieses Wasser-Einspritzventil durch eine in den Wassertank rücklaufende Spülwassermenge gekühlt ist.

Für den Winterbetrieb kann ferner in Ausgestaltung der Erfindung eine Beheizungseinrichtung für den Wassertank vorgesehen sein, wobei z.B. im Wassertank ein Temperaturfühler vorgesehen sein kann, der über die Motorelektronik bei Vereisung eine Drosselklappe in einer Nebenschlußleitung des Abgasrohres öffnet, wodurch Auspuffgase zur Erwärmung durch den Wassertank geleitet werden.

Schließlich ist erfindungsgemäß vorgesehen, daß ein im Wassertank angeordneter Temperaturfühler über die Motorelektronik eine elektrisch betriebene Beheizungseinrichtung für den Wassertank steuert.

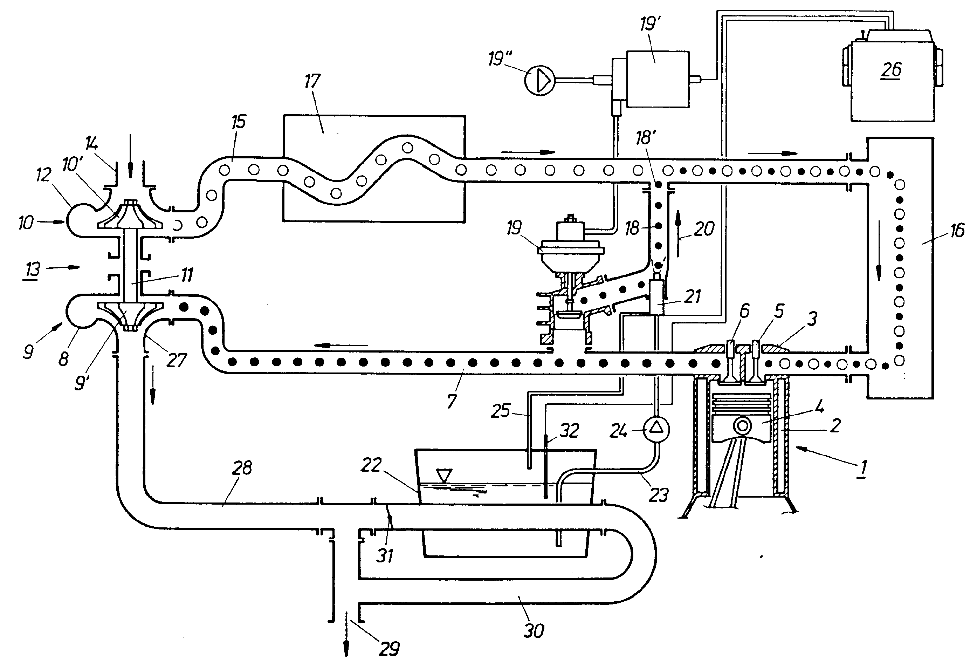

Die Erfindung wird anhand des in der Zeichnung schematisch dargestellten Ausführungsbeispieles näher erläutert.

Die Brennkraftmaschine, generell mit 1 bezeichnet, weist einen Zylinder 2, einen Zylinderkopf 3, einen hin- und hergehenden Kolben 4 sowie ein Einlaßventil 5 und ein Auslaßventil 6 auf. Das an das Auslaßventil 6 anschließende Abgasrohr 7 ist mit dem Spiral-Gehäuse 8 der Abgasturbine 9 strömungsverbunden. Das Laufrad 9' der Abgasturbine 9 ist mit dem Laufrad 10' des Luftverdichters 10 über die Welle 11 drehfest verbunden. Das Spiral-Gehäuse des Luftverdichters 10 ist mit 12, der aus Abgasturbine 9 und Luftverdichter 10 gebildete Turbolader ist generell mit 13 bezeichnet. In das Spiral-Gehäuse 12 des Luftverdichters 10 strömt über den Stutzen 14 axial Frischluft ein; die verdichtete Ladeluft strömt aus diesem Spiral-Gehäuse 12 über das Ladeluftrohr 15 und den Sammler 16 zum Einlaßventil 5, wobei sie den Ladeluftkühler 17 passiert.

Zwischen dem Abgasrohr 7 und dem Ladeluftrohr 15 ist eine Verbindungsleitung 18 vorgesehen, über welche, gesteuert durch das hier nicht näher zu beschreibende elektropneumatisch betriebene Abgasrückführventil 19, ein Abgasteilstrom vom Abgasrohr 7 zum Ladeluftrohr 15 in Richtung des Pfeiles 20 überströmen kann. Der elektropneumatische Druckwandler ist mit 19' und die Vakuumpumpe mit 19'' bezeichnet. In die Verbindungsleitung 18 ist, in Strömungsrichtung des Abgasteilstromes, hinter dem Abgasrückführventil 19 ein Wasser-Einspritzventil 21 so angeordnet, daß es zur besseren Durchmischung des eingespritzten Wassers mit dem Abgasteilstrom vom Abgasteilstrom umfaßt wird. Ab der Mündungsstelle 18' der Verbindungsleitung 18 am Ladeluftrohr 15 wird das Ladeluftrohr 15 bzw. das Saugrohr 16 bei betriebswarmem Zustand und Hochlastbereich der Brennkraftmaschine von einem Gemisch aus Luft, Abgas und Wasserdampf durchströmt, wie dies zeichnerisch durch Symbole veranschaulicht ist.

Das elektronisch gesteuerte Wasser-Einspritzventil 21 wird aus dem Wassertank 22 über die Rohrleitung 23 durch die Wasserpumpe 24 (Vorpumpe) mit Wasser versorgt. Zwecks Kühlung des Wasser-Einspritzventiles 21 fördert die Wasserpumpe 24 eine überschüssige Spülwassermenge, welche über die Rohrleitung 25 wieder in den Wassertank zurückfließt. Ein elektrisches Steuergerät 26 sorgt dafür, daß die vorbestimmten Wassermengen, die dem Motorkennfeld zugeordnet sind, nur im betriebswarmen Zustand und Hochlastbereich der Brennkraftmaschine eingespritzt werden.

Der Abgas-Hauptstrom verläßt das Spiral-Gehäuse 8 der Abgasturbine 9 über den Rohrstutzen 27 und gelangt über das Auspuffrohr 28 zum Auspuff 29. Bei winterlichen Außentemperaturen (unter 0°C) kann über die den Wassertank 22 durchsetzende Abgas-Nebenschlußleitung 30 durch Öffnen der Drosselklappe 31 ein Teil des Abgashauptstromes geleitet werden. Dieser Vorgang kann automatissiert werden. Eine Vereisung des Tanks kann bewußt zugelassen werden, da die Wassereinspritzung nach einem Kaltstart sowieso noch nicht benötigt wird. Ein Temperaturfühler 32 im Wassertank 22 meldet der Steuerelektronik 26 eine eventuelle Vereisung, worauf durch das Öffnen der Drosselklappe 31 Auspuffgase zur Erwärmung durch den Wassertank 22 geleitet werden. Ist der Tankinhalt verflüssigt, wird die Drosselklappe 31 wieder geschlossen.

Als Alternative zur zuvor beschriebenen Beheizung des Wassertanks kann auch eine elektrische Beheizung bzw. eine mit flüssigen oder gasförmigen Brennstoffen betriebene Heizung vorgesehen sein. Der Wassertank ist dann allerdings bestmöglich zu isolieren.

Das mit der Wassereinspritzung verbundene Problem der Korrosion im Ansaugteil und Zylinder wird durch den Umstand beseitigt, daß sich zwischen Hochlastbetrieb und Abstellen des Motors immer eine Phase Teillastbetrieb ohne Wassereinspritzung befinden wird, die zur Abtrocknung eventuell benetzter Bauteile ausreichen wird. Trotzdem ist die Verwendung schefelarmen Kraftstoffes empfehlenswert, um Korrosionen im Auspuff- und Abgasrückführsystem hintanzuhalten. Die erfindungsgemäße Ausführung ist mit allen bekannten Abgasnachbehandlungssystemen, wie Partikelfilter, Katalysator etc., kombinierbar.

## Patentansprüche

1. Brennkraftmaschine mit Abgasturbolader (13), ggf. einem Ladeluftkühler- (17) sowie einem Abgasrückführventil (19), welches in einer vor der Abgasturbine (9) aus dem Abgasrohr (7) abzweigenden, in Strömungsrichtung nach der Abgasturbine (9) in das Ladeluftrohr (15) einmündenden Verbindungsleitung (18) angeordnet ist, **gekennzeichnet durch** eine Einrichtung zur Wassereinspritzung mit einem elektronisch gesteuerten Wasser-Einspritzventil (21), welches über eine Vorpumpe (24) mit einem Wassertank (22) verbunden ist, wobei das Wasser-Einspritzventil (21) in den die Verbindungsleitung (18) durchströmenden Abgasteilstrom im betriebswarmen Zustand und Hochlastbereich der Brennkraftmaschine (1) Wasser einspritzt.

2. Brennkraftmaschine nach Anspruch 1, **dadurch gekennzeichnet**, daß die Wasser-Einspritzmengen im Motorkennfeld in der Motorelektronik (26) abgelegt sind.

3. Brennkraftmaschine nach den Ansprüchen 1 und 2, **dadurch gekennzeichnet**, daß das Wasser-Einspritzventil (21) in der Verbindungsleitung (18) - in Strömungsrichtung des Abgasteilstromes - hinter dem Abgasrückführventil (19) angeordnet ist.

4. Brennkraftmaschine nach Anspruch 2 oder 3, **dadurch geennzeichnet**, daß das Wasser-Einspritzventil (21) vom Abgasteilstrom umfaßt ist.

5. Brennkraftmaschine nach einem der Ansprüche 2 bis 4, **dadurch gekennzeichnet**, daß das Wasser-Einspritzventil (21) durch eine in den Wassertank (22) rücklaufende Spülwassermenge gekühlt ist.

6. Brennkraftmaschine nach einem der Ansprüche 2 bis 5, **dadurch gekennzeichnet**, daß für den Winterbetrieb eine Beheizungseinrichtung für den Wassertank (22) vorgesehen ist.

7. Brennkraftmaschine nach Anspruch 6, **dadurch gekennzeichnet**, daß im Wassertank (22) ein Temperaturfühler (32) vorgesehen ist, der über die Motorelektronik (26) bei Vereisung eine Drosselklappe (31) in einer Nebenschlußleitung (30) des Abgasrohres (28) öffnet, wodurch Auspuffgase zur Erwärmung durch den Wassertank (22) geleitet werden.

8. Brennkraftmaschine nach Anspruch 6, **dadurch gekennzeichnet**, daß ein im Wassertank (22) angeordneter Temperaturfühler (32) über die Motorelektronik (26) eine elektrisch betriebene Beheizungseinrichtung für den Wassertank (22) steuert.

## Claims

1. Internal combustion engine with an exhaust gas turbocharger (13), optionally with a charge air cooler (17), as well as an exhaust gas recycling valve (19) which is arranged within a connecting pipe (18) branching from the exhaust pipe (7) upstream of the exhaust gas turbine (9) and opening into the charge pipe (15) downstream of the exhaust gas turbine (9), as seen in the direction of flow, **wherein** there is provided an apparatus for the injection of water comprising an electronically controlled water injection valve (21) connected to a water tank (22) via a fore-pump (24), said water injection valve (21) injecting water into the partial exhaust gas stream flowing through the connecting pipe (18) at operating temperature and at high load operation of the internal combustion engine (1).

2. Internal combustion engine in accordance with claim 1, **wherein** the parameters controlling the amounts of water to be injected are stored with the engine characteristics in the electronic control unit (26) of the engine.

3. Internal combustion engine in accordance with claims 1 and 2, **wherein** the water injection valve (21) is positioned in the connecting pipe (18) downstream of the exhaust recycling valve (19), as seen in the direction of flow of the partial exhaust gas stream.

4. Internal combustion engine in accordance with claim 2 or 3, **wherein** the water injection valve (21) is encompassed by the partial exhaust gas stream.

5. Internal combustion engine in accordance with any of claims 2 to 4, **wherein** the water injection valve (21) is cooled by an amount of water recycled into the water tank (22).

6. Internal combustion engine in accordance with any of claims 2 to 5, **wherein** a heating device for the water tank (22) is provided for operation in winter.

7. Internal combustion engine in accordance with claim 6, **wherein** a temperature sensor (32) is provided in the water tank (22), said sensor opening a butterfly valve (31) in a bypass pipe (30) of the exhaust pipe (28) via the electronic control unit (26) in the instance of icing, thus allowing exhaust gases to be directed through the water tank (22) for heating.

8. Internal combustion engine in accordance with claim 6, **wherein** a temperature sensor (32) located in the water tank (22) will control, via the electronic control unit (26), an electrically operated heating device for the water tank (22).

## Revendications

1. Moteur thermique avec un turbocompresseur à gaz d'échappement (13), le cas échéant un radiateur de refroidissement d'air d'admission (17) ainsi qu'une soupape de recyclage de gaz brûlés (19) qui est implantée dans une conduite de liaison (18) dérivant de la tubulure d'échappement (7) avant la turbine à gaz d'échappement (9) et débouchant dans la tubulure d'admission d'air (15) dans le sens d'écoulement après la turbine à gaz d'échappement (9).

2. Moteur thermique selon la revendication 1, caractérisé en ce que les quantités d'eau injectées en fonction de la caractéristique du moteur sont enregistrées dans l'électronique du moteur (26).

3. Moteur thermique selon l'une des revendications 1 et 2, caractérisé en ce qu'on implante l'injecteur d'eau (21) dans la conduite de liaison (18) - dans le sens d'écoulement du courant partiel des gaz brûlés - en aval de la soupape à recyclage de gaz brûlés (19).

4. Moteur thermique selon les revendications 2 ou 3, caractérisé en ce que l'injecteur d'eau (21) est entouré par le courant partiel de gaz brûlés.

5. Moteur thermique selon l'une des revendications 2 à 4, caractérisé en ce que l'injecteur d'eau (21) est refroidi par une quantité d'eau de rinçage qui retourne dans le réservoir d'eau (22).

6. Moteur thermique selon l'une des revendications 2 à 5, caractérisé en ce que pour le fonctionnement en hiver, on prévoir un dispositif de chauffage du réservoir d'eau (22).

7. Moteur thermique selon la revendication 6, caractérisé en ce qu'on prévoit dans le réservoir d'eau (22) une sonde de température (32) qui en cas de gel ouvre une vanne papillon (31) par l'intermédiaire de l'électronique du moteur (26) dans une conduite latérale (30) de gaz brûlés du tube d'échappement (28), ce qui fait passer des gaz d'échappement dans le réservoir d'eau (22) pour le réchauffer.

8. Moteur thermique selon la revendication 6, caractérisé en ce qu'une sonde de température (32) placée dans le réservoir d'eau (22) commande par l'intermédiaire de l'électronique du moteur (26) un dispositif de chauffage électrique du réservoir d'eau (22).
